(19) Europäisches Patentamt

European Patent Office

Office européen des brevets

(11) Veröffentlichungsnummer: **0 312 819 B1**

(12) **EUROPÄISCHE PATENTSCHRIFT**

(45) Veröffentlichungstag der Patentschrift: **02.01.92**

(51) Int. Cl.⁵: **B23B 41/00**

(21) Anmeldenummer: **88116196.2**

(22) Anmeldetag: **30.09.88**

(54) **Verfahren zum Einbringen von Befestigungsbohrungen und Ventilbohrungen in eine Schüssel bzw. eine Felge eines Rades eines Karftfahrzeuges.**

(30) Priorität: **23.10.87 DE 3735858**
**23.10.87 DE 3735859**

(43) Veröffentlichungstag der Anmeldung:
**26.04.89 Patentblatt 89/17**

(45) Bekanntmachung des Hinweises auf die
Patenterteilung:
**02.01.92 Patentblatt 92/01**

(84) Benannte Vertragsstaaten:
**CH DE ES FR GB IT LI SE**

(56) Entgegenhaltungen:
**DE-A- 2 302 631**
**DE-A- 3 333 499**
**US-A- 4 353 156**
**US-A- 4 490 079**

(73) Patentinhaber: **CHIRON-WERKE GMBH & CO.**
**KG**
**Talstrasse 23**
**W-7200 Tuttlingen(DE)**

(72) Erfinder: **Winkler, Hans-Henning, Dr.**
**Brunnentalstrasse 88**
**W-7200 Tuttlingen(DE)**
Erfinder: **Rütschle, Eugen**
**Schönenbergstrasse 20**
**W-7202 Mühlheim(DE)**

(74) Vertreter: **Witte, Alexander, Dr.-Ing.**
**Witte, Weller & Gahlert Patent- und Rechts-**
**anwälte Augustenstrasse 7**
**W-7000 Stuttgart 1(DE)**

## Beschreibung

Die Erfindung betrifft ein Verfahren zum Einbringen von Bohrungen in Räder von Kraftfahrzeugen, bei dem zur Achse des Rades parallel verlaufende Befestigungsbohrungen in eine Schüssel sowie zur Achse des Rades unter einem Winkel verlaufende Ventilbohrungen in der Felge des Rades eingebracht werden, wobei die Bohrungen zwischen einer ersten und einer zweiten Oberfläche eines Bereiches des Rades erzeugt werden, und die Durchmesser der Bohrungen in der Ebene der Oberflächen größer sind als ein Durchmesser in Abschnitten zwischen den Oberflächen, und wobei ferner eine Werkzeugmaschine verwendet wird, in deren Spindel Werkzeuge einspannbar sind und die Spindel in der Achse der Werkzeuge sowie senkrecht dazu, jeweils relativ zu dem Rad verfahrbar ist.

Bei einem bekannten Verfahren wird das Rad auf dem Werkstücktisch eingespannt, und es wird dann die Durchgangsbohrung und anschließend die Ansenkung auf der einen Oberfläche des Rades angebracht. Um dann auch die gegenüberliegende Oberfläche des Rades anzusenken, wird das Rad umgespannt, beispielsweise um 180° gedreht.

Das bekannte Verfahren ist damit sehr arbeitsintensiv, weil zum Anbringen der Bohrungen das Rad umgespannt werden muß und zwar insgesamt um 180°, was entweder sehr aufwendige mechanische Umspanneinrichtungen oder einen erheblichen Personalaufwand erfordert.

Der Erfindung liegt demgegenüber die Aufgabe zugrunde, ein Verfahren der eingangs genannten Art dahingehend weiterzubilden, daß das Rad ohne Umspannen im Bereich der genannten Bohrungen mit Ansenkungen größeren Durchmessers auf beiden Oberflächen versehen werden kann.

Diese Aufgabe wird erfindungsgemäß durch die folgenden Schritte gelöst:

a) Einspannen eines Rades in einer Aufnahme auf einem Werkstücktisch derart, daß die erste Oberfläche den Werkzeugen zuweist, die zweite Oberfläche von den Werkzeugen abgewandt ist und die Achse des Rades eine erste Winkelstellung zur Achse des Werkzeuges einnimmt;

b) Anbringen einer ersten Durchgangsbohrung mit dem jeweils kleinsten Durchmesser der Bohrung;

c) Ansenken der ersten Durchgangsbohrung in der ersten Oberfläche mit einem ersten Abschnitt größeren Durchmessers;

d) unter Beibehaltung der Einspannung des Rades radiales Verfahren eines Werkzeuges, das an seiner Unterseite einen exzentrisch zur Achse des Werkzeuges angeordneten axialen Schaft aufweist, der mit einem radialen Vorsprung versehen ist, der wiederum auf seiner der Spindel zugewandten Seite eine Schneide trägt, wobei die radiale lichte Breite des Schaftes mit Vorsprung und Schneide kleiner ist als der Durchmesser der Durchgangsbohrung, in eine erste Position, bei der die Achse des Werkzeuges derart gegenüber einer Längsachse der Durchgangsbohrung versetzt ist, daß der Schaft mit Vorsprung und Schneide sich axial innerhalb des Umrisses der Durchgangsbohrung befindet;

e) axiales Einfahren des Werkzeuges durch die Durchgangsbohrung hindurch bis in eine zweite Position, in der sich die Schneide jenseits der von der Spindel abgewandten zweiten Oberfläche befindet;

f) radiales Verfahren des Werkzeuges in eine dritte Position, in der die Achse des Werkzeuges koaxial zur Längsachse der Durchgangsbohrung liegt;

g) Einziehen und Drehen des Werkzeuges zum Anbringen des zweiten Abschnittes größeren Durchmessers;

h) radiales Verfahren des Werkzeuges zurück in die zweite Position;

i) axiales Ausfahren des Werkzeuges zurück in die erste Position;

k) Verschwenken der Aufnahme um den Winkel um eine zur Achse des Rades senkrechte Achse;

l) Anbringen einer zweiten Durchgangsbohrung mit dem jeweils kleinsten Durchmesser der Bohrung;

m) Ansenken der zweiten Durchgangsbohrung in der ersten Oberfläche mit einem ersten Abschnitt größeren Durchmessers;

n) unter Beibehaltung der Einspannung des Rades radiales Verfahren eines Werkzeuges, das an seiner Unterseite einen exzentrisch zur Achse des Werkzeuges angeordneten axialen Schaft aufweist, der mit einem radialen Vorsprung versehen ist, der wiederum auf seiner der Spindel zugewandten Seite eine Schneide trägt, wobei die radiale lichte Breite des Schaftes mit Vorsprung und Schneide kleiner ist als der Durchmesser der Durchgangsbohrung, in eine vierte Position, bei der die Achse des Werkzeuges derart gegenüber einer Längsachse der Durchgangsbohrung versetzt ist, daß der Schaft mit Vorsprung und Schneide sich axial innerhalb des Umrisses der Durchgangsbohrung befindet;

o) axiales Einfahren des Werkzeuges durch die Durchgangsbohrung hindurch bis in eine fünfte Position, in der sich die Schneide jenseits der von der Spindel abgewandten zweiten Oberfläche befindet;

p) radiales Verfahren des Werkzeuges in eine sechste Position, in der die Achse des Werkzeuges koaxial zur Längsachse der Durchgangsbohrung liegt;

q) Einziehen und Drehen des Werkzeuges zum Anbringen des zweiten Abschnittes größeren Durchmessers;

r) radiales Verfahren des Werkzeuges zurück in die fünfte Position;

s) axiales Ausfahren des Werkzeuges zurück in die vierte Position.

Die der Erfindung zugrundeliegende Aufgabe wird auf diese Weise vollkommen gelöst, weil es ohne Umspannen des Rades möglich ist, eine von beiden Seiten angesenkte Befestigungsbohrung oder Ventilbohrung zu erzeugen, wobei zusätzlich entscheidend hinzukommt, daß auch nur ein äußerst einfaches Werkzeug erforderlich ist und die Spindel der Werkzeugmaschine nur sehr einfache Bewegungen ausführen muß.

Zusammenfassend ergibt sich daher der Vorteil, daß mit unkomplizierten Vorrichtungen, einfachem Werkzeug und in nur einer einzigen Aufspannung die erforderlichen Bohrungen in einem Rad eines Kraftfahrzeugs serienmäßig angebracht werden können.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:

Fig. 1      eine Seitenansicht, teilweise aufgebrochen, eines Rades mit Felge und Schüssel sowie den erforderlichen Bohrungen;

Fig. 2      in stark vergrößertem Maßstab eine Befestigung eines Rades an einem Kraftfahrzeug nach dem Stand der Technik;

Fig. 3 bis 6      verschiedene Bewegungsskizzen zur Erläuterung einer Ausführungsform des erfindungsgemäßen Verfahrens.

Fig. 7      eine Draufsicht auf ein Ausführungsbeispiel einer erfindungsgemäßen Vorrichtung mit einer Tandem-Anordnung von Aufnahmen für Räder;

Fig. 8      einen Schnitt durch einen Teil der Vorrichtung gemäß Fig. 7, und zwar entlang der Linie VIII-VIII von Fig. 7, in vergrößertem Maßstab;

Fig. 9      eine Ansicht der Vorrichtung gemäß Fig. 7, und zwar in Richtung der Pfeile IX-IX von Fig. 7, ebenfalls in vergrößertem Maßstab;

Fig. 10      einen weiteren Schnitt durch die Vorrichtung gemäß Fig. 7, und zwar entlang der Linie X-X von Fig. 7, ebenfalls in vergrößertem Maßstab;

Fig. 11      einen weiteren Schnitt durch die Vorrichtung gemäß Fig. 7, und zwar entlang der Linie XI-XI von Fig. 7, gleichfalls in vergrößertem Maßstab.

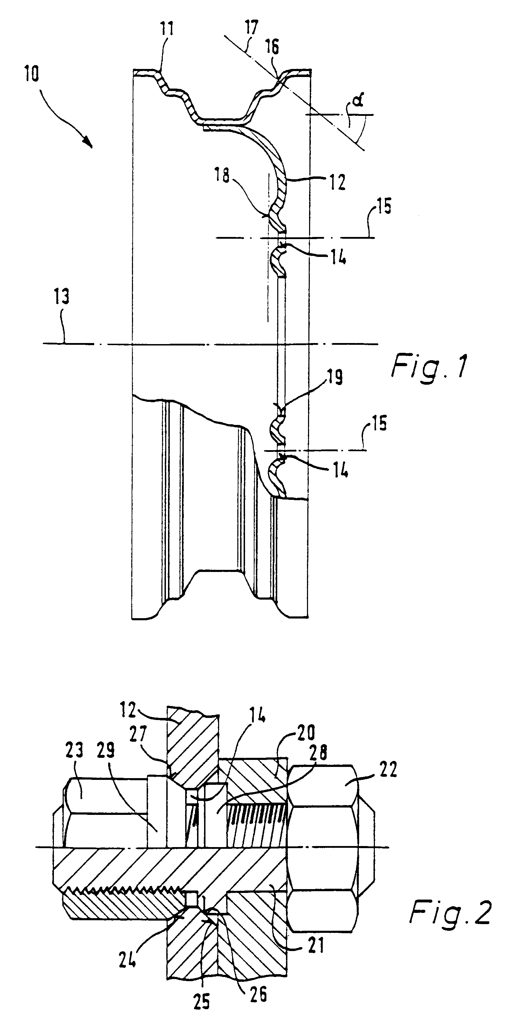

In Fig. 1 bezeichnet 10 insgesamt ein Rad eines Kraftfahrzeuges, das der Übersichtlichkeit halber ohne Reifen dargestellt ist. Das Rad 10 besteht in an sich bekannter Weise aus einer Felge 11 sowie einer Schüssel 12, die um eine erste Achse 13 des Rades 10 herum angeordnet sind. Die Schüssel 12 ist über einen Umfang verteilt, mit einer Mehrzahl von Befestigungsbohrungen 14, beispielsweise vier oder fünf derartigen Befestigungsbohrungen 14 versehen. Die zweiten Achsen 15 der Befestigungsbohrungen 14 verlaufen zur ersten Achse 13 des Rades 10 parallel.

Die Felge 11 ist in der Nähe ihres äußeren Umfanges mit einer Ventilbohrung 16 versehen, deren dritte Achse 17 zur ersten Achse 13 des Rades 10 unter einem Winkel $\alpha$ geneigt verläuft.

Die Befestigungsbohrungen 14 dienen dazu, um das Rad 10 mittels geeigneter Schrauben oder sonstiger Befestigungsmittel in einer Referenzebene 18 an einem Achsflansch des Kraftfahrzeuges festzuschrauben, der eine Mittenöffnung 19 der Schüssel 12 durchsetzt. Die Ventilbohrung 16 dient dazu, um das Ventil eines in Fig. 1 nicht dargestellten Reifens aufzunehmen.

Es versteht sich, daß die vorstehend genannten Bohrungen 14 und 16 nur beispielhaft zu verstehen sind und daß sich die Erfindung auch auf weitere Bohrungen, beispielsweise Zentrierbohrungen oder Ausgleichsbohrungen für eine Unwucht des Rades 10 erstreckt.

Fig. 2 zeigt mit einem Ausführungsbeispiel eine bekannte Art der Befestigung von Rädern 10 an einem Achsflansch 20 des Kraftfahrzeuges. Schraubverbindungen der gezeigten Art sind beispielsweise aus der deutschen Industrienorm DIN 74 361 bekannt.

Der Achsflansch 20 ist mit einem Schraubbolzen 21 durchsetzt, der von der Rückseite des Achsflansches 20 mit einer Kontermutter 22 gehalten ist. Auf das andere Ende des Schraubbolzens 21 ist eine Radmutter 23 aufgeschraubt, um die Schüssel 12 des Rades 10 am Achsflansch 20 festzuschrauben.

Die Schüssel 12 ist im Bereich der Befestigungsbohrung 14 mit einem ersten Zentrierkonus 24 und einem zweiten Zentrierkonus 25 auf der Vorder- bzw. Rückseite versehen. Den Konussen 24, 25 sind ein erster Gegenkonus 26 und ein zweiter Gegenkonus 27 zugeordnet, die an einem Bund 28 des Schraubbolzens 21 bzw. an der Rückseite der Radmutter 23 angeordnet sind.

Durch die beschriebene Anordnung wird eine selbstzentrierende Befestigung des Rades 10 am Achsflansch 20 erreicht.

Es sei betont, daß die in Fig. 2 dargestellte Befestigungsanordnung nur beispielhaft geschildert wurde, sie bildet keinen Bestandteil der vorliegenden Erfindung. Wichtig ist allein, daß Befestigungsbohrungen 14 ebenso wie Ventilbohrungen 16 an Rädern 10 an ihrer Vorder- und Rückseite jeweils mit vergrößerten Durchmessern in die jeweiligen Oberflächen der Schüssel 12 münden, während die genannten Bohrungen 14, 16 im mittleren Bereich einen kleineren Querschnitt aufweisen.

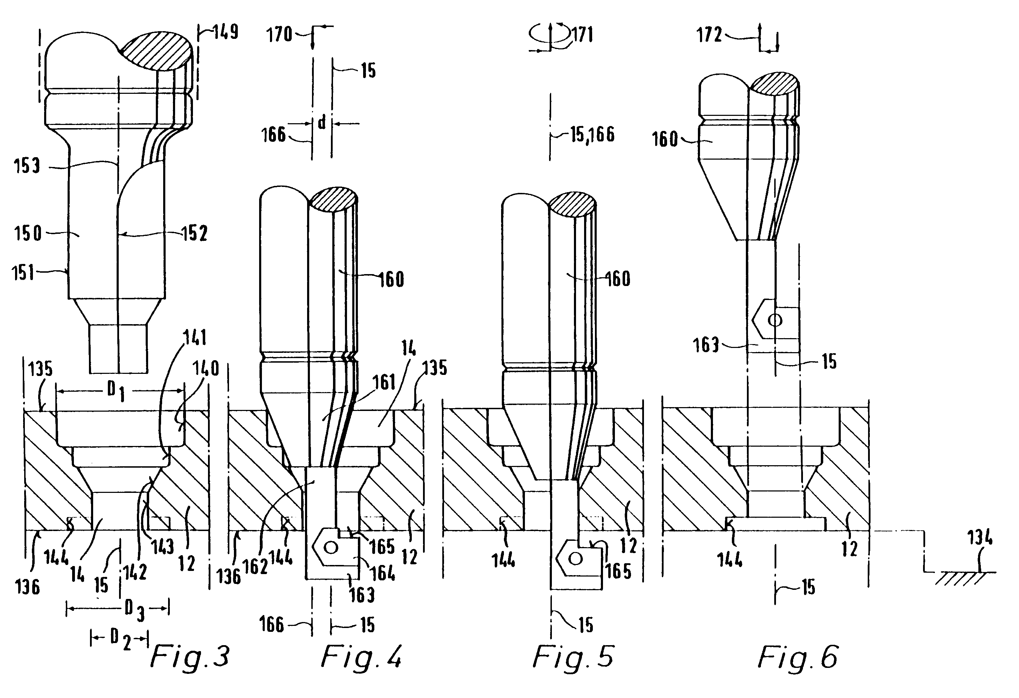

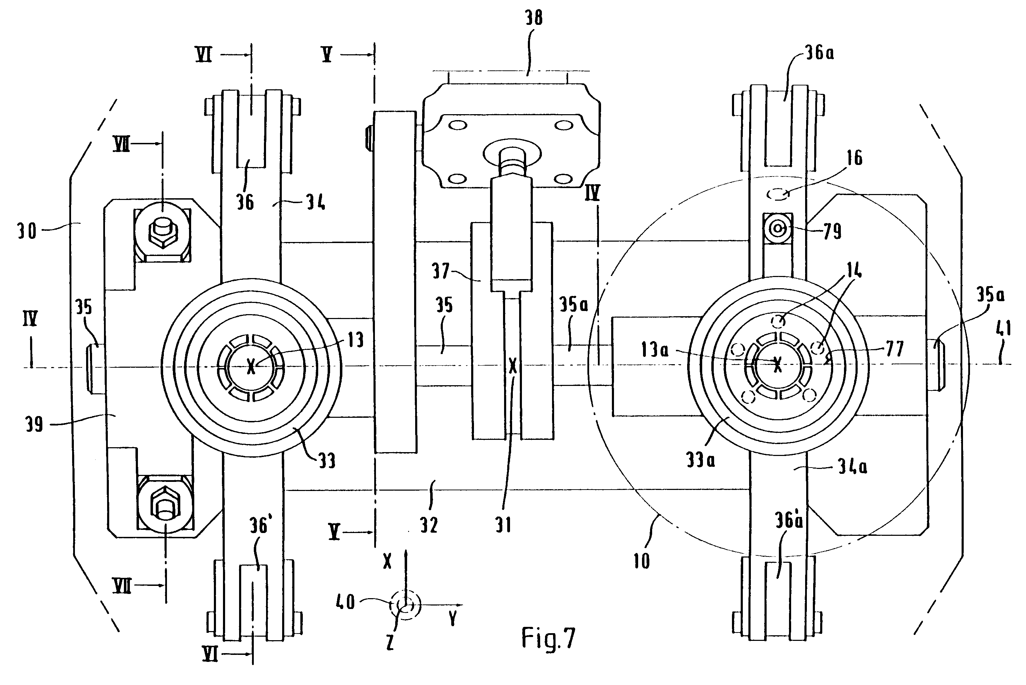

Um eine derartige Formgestaltung zu erzielen, wird erfindungsgemäß ein Verfahren angewendet, wie nachstehend anhand der Bewegungsskizzen der Fig. 3 bis 6 erläutert werden soll:
Auf einem weiter unten anhand der Figuren 7 bis 11 noch näher zu erläuternden Werkstücktisch 134 wird ein zu bearbeitendes Rad eingespannt, wobei im dargestellten Beispielsfall die Fig. 3 bis 6 zunächst der Fall betrachtet werden soll, bei dem eine Befestigungsbohrung 14 in der Schüssel 12 des Rades 10 angebracht werden soll.

Der im Ausschnitt dargestellte Bereich der Schüssel 12 weist eine erste, obere Oberfläche 135 sowie eine zweite, untere Oberfläche 136 auf und die Einspannung des Rades 10 ist so gewählt, daß die zweite Oberfläche 136 mit gewissem Abstand oberhalb der Oberfläche des Werkstücktischs 134 angeordnet ist.

In Fig. 3 ist die Befestigungsbohrung 14 in einem Zustand dargestellt, bei der in das Material bereits, von der ersten Oberfläche 135 aus nach unten gesehen, ein erster, zylindrischer Abschnitt großen Durchmessers $D_1$, daran angrenzend ein zweiter, ebenfalls zylindrischer Abschnitt 141, kleineren Durchmessers, daran angrenzend ein dritter, sich konisch weiter verjüngender Abschnitt 142 und daran schließlich angrenzend ein vierter, ebenfalls zylindrischer Abschnitt 143 kleineren Durchmessers $D_2$ angebracht wurde.

Hierzu kann z.B. eine Werkzeugmaschine 149 verwendet werden, in deren Spindel ein Werkzeug 150 eingespannt ist, dessen Kontur 151 eine Schneide 152 aufweist, die beispielsweise der Außenkontur der Abschnitte 141 bis 143 angepaßt ist und diese in einem Arbeitsgang anbringt.

Eine vierte Achse 153 des Werkzeugs 150 verläuft in diesem Falle koaxial mit der zweiten Achse 15 der Befestigungsbohrung 14.

Es soll nun die Befestigungsbohrung 14 an der zweiten Oberfläche 136 mit einem fünften Abschnitt, nämlich einer zylindrischen Ansenkung eines großen Durchmessers $D_3$ versehen werden, wie dies in den Fig. 3 bis 5 strichpunktiert eingetragen ist.

Mit einem Werkzeug nach Art des Werkzeuges 150 der Fig. 3 ist dies ersichtlich nicht möglich, weil die Befestigungsbohrung 14 im Zustand der Fig. 3 als Durchgangsbohrung einen Minimaldurchmesser $D_2$ des vierten Abschnitts 143 aufweist, so daß der Bereich des fünften Abschnitts 144 mit größerem Durchmesser $D_3$ ohne weiteres nicht zugänglich ist.

Erfindungsgemäß wird nun ein hakenartikes Senkwerkzeug 160 verwendet, wie dies in den Fig. 4 bis 6 dargestellt ist. Das erfindungsgemäße Senkwerkzeug 160 geht nach unten in einen konischen Abschnitt 161 über, der wiederum an seiner Unterseite in einen exzentrischen Schaft 162 ausläuft. Der exzentrische Schaft 162 ist seinerseits an seinem unteren Ende mit einem radial vorstehenden Vorsprung 163 versehen, an dem eine Schneidplatte 164 angebracht ist. Die Schneidplatte 164 ist mit einer Schneide 165 versehen, die beispielsweise horizontal und zum konischen Abschnitt 161 des Senkwerkzeugs 160 hin weisend ausgebildet ist. Dies ist jedoch nur beispielhaft zu verstehen, weil selbstverständlich die Schneide 165 auch andere Formgestaltungen aufweisen kann.

Von Wichtigkeit ist beim Senkwerkzeug 160, daß die radiale Breite des Schafts 162 mit Vorsprung 163 und Schneidplatte 164 kleiner ist als der Durchmesser $D_2$ des vierten Abschnitts 143, d.h. kleiner ist als die lichte Weite der Befestigungsbohrung 14 im Zustand als Durchgangsbohrung der Fig. 3.

Die Spindel der Werkzeugmaschine 149 ist in an sich bekannter Weise so ausgebildet, daß Werkzeuge nicht nur entlang ihrer Längsachse vertikal verfahren werden können sondern vielmehr auch in einer Richtung senkrecht dazu in der Horizontalen.

Dies macht man sich beim erfindungsgemäßen Verfahren zunutze, indem zunächst in Richtung eines in Fig. 4 dargestellten Pfeils 170 das Werkzeug 160 mit seiner fünften Achse 166 in horizontaler Richtung verfahren wird, bis die fünfte Achse 166 einen Abstand d von der zweiten Achse 15 der Befestigungsbohrung 14 aufweist. In dieser Position befindet sich die Außenkontur des Schafts 162 mit Vorsprung 163 und Schneidplatte 164 innerhalb der lichten Weite des vierten Abschnitts 143 der Befestigungsbohrung 14. Das Werkzeug 160 kann nun in der Vertikalen nach unten verfahren werden, bis der Schaft 162 mit Vorsprung 163 und Schneidplatte 164 bis unterhalb der zweiten Oberfläche 136 durchgetaucht ist. Die Schneide 165 befindet sich jetzt ebenfalls unterhalb der zweiten Oberfläche 136.

Das Senkwerkzeug 160 wird nun, wie mit Pfeilen 171 in Fig. 5 dargestellt, in der horizontalen Richtung wieder zurückgefahren, bis die fünfte Achse 166 des Senkwerkzeugs 160 wieder mit der zweiten Achse 15 der Befestigungsbohrung 14 fluchtet. In dieser Position wird das Senkwerkzeug 160 nun angehoben und gleichzeitig gedreht, wodurch die Schneide 165 in die zweite Oberfläche 136 den fünften Abschnitt 144 als zylindrische Ansenkung von unten einbringt.

Sobald dies geschehen ist, wird das Senkwerkzeug 160, wie mit Pfeilen 172 in Fig. 6 angedeutet, zunächst etwas abgesenkt, dann radial einwärts gefahren, bis die in Fig. 4 dargestellte exzentrische Position mit einem Abstand d der Achsen 15 und 166 erreicht ist und es wird dann vertikal wieder nach oben aus der Befestigungsbohrung 14 herausgezogen. Der Bearbeitungsvorgang für die zylindrische Ansenkung 144 an der Unterseite der Schüssel 12 ist damit abgeschlossen.

Wie man leicht erkennt, konnte auf diese Weise die auf der Rückseite des Werkzeugs liegende zylindrische Ansenkung im fünften Abschnitt 144 mit einem verhältnismäßig einfachen Werkzeug und einem ebenfalls verhältnismäßig einfachen Bewegungsablauf der Spindel angebracht werden, ohne daß das Rad 10 dafür umgespannt werden mußte.

Man erkennt aus den Fig. 3 bis 6, daß auf diese Weise fünfte Abschnitte 144 unterschiedlichen Durchmessers auf der Rückseite des Werkzeugs angebracht werden können, wobei eine Grenze nach oben dadurch gesetzt ist, daß der Durchmesser $D_3$ des fünften Abschnitts 142 nicht mehr als doppelt so groß sein kann wie der kleinste Durchmesser $D_2$ der Befestigungsbohrung 14.

Es wurde bereits erwähnt, daß die in Fig. 3 bis 6 dargestellte konkrete Formgestaltung der Befestigungsbohrung 14 mit den Abschnitten 140 bis 142 selbstverständlich nur beispielhaft zu verstehen ist und die Erfindung keinesfalls einschränkt.

Das aufgespannte Rad 10 wird nun um den Winkel $\alpha$ gedreht, und zwar um eine Achse, die zur Achse 13 des Rades 10 senkrecht verläuft. Auf diese Weise wird bewirkt, daß die dritte Achse 17 der Ventilbohrung 16 nunmehr parallel zur vierten Achse 153 des Werkzeuges 150 verläuft.

Es schließen sich nun die vorstehend beschriebenen Bearbeitungsschritte - ggf. mit einem geringfügig anders dimensionierten Werkzeug - an, um auch die Ventilbohrung 16 beidseitig mit einer Einsenkung zu versehen.

Der wesentliche Vorteil der Erfindung liegt dabei darin, daß die gesamte Bearbeitung der Befestigungsbohrungen 14 sowie der Ventilbohrungen 16 in einer einzigen Aufspannung erfolgen kann, indem nämlich nach dem vollständigen Bearbeiten der Befestigungsbohrungen 14 ohne Umspannen des Rades 10 die Ventilbohrung 16 eingebracht werden kann. Es versteht sich dabei, daß diese Reihenfolge auch umgekehrt sein kann.

Um das aufgespannte Rad 10 zwischen den beiden Bearbeitungsvorgängen um den Winkel $\alpha$ zu verschwenken, wird eine Vorrichtung eingesetzt, wie sie nachstehend näher beschrieben werden soll.

Fig. 7 zeigt eine Draufsicht auf einen Werkstücktisch 30 eines Bearbeitungszentrums, der um eine Hochachse 31 schwenkbar ist, und zwar vorzugsweise jeweils gegenläufig um 180°.

Auf dem Werkstücktisch 30 ist eine Grundplatte 32 montiert, die in symmetrischer Anordnung zur Hochachse 31 zwei Aufnahmen 33, 33a für die Räder 10 trägt. Die Aufnahmen 33 und 33a sind auf Wippen 34, 34a angeordnet. Die Wippen 34, 34a sitzen drehfest auf Wellen 35, 35a, die koaxial verlaufen und mit Stirnflächen einander benachbart angeordnet sind. An den freien Enden der Wippen 34, 34a sind Niederhalter 36, 36` bzw. 36a, 36a` angeordnet.

Eine Kurbel 37 ist drehfest mit den Wellen 35, 35a verbunden. Die Kurbel 37 wird von einer ersten Kolben-Zylinder-Einheit 38 betätigt.

Am linken freien Ende der Welle 35 ist ein Anschlag 36 angeordnet, um die Schwenkbewegung der Wippen 34 und 34a zu begrenzen.

Mit 40 ist ein zum Werkstücktisch 30 gehöriges Bearbeitungszentrum angedeutet. Das Werkzeug 40 ist entlang dreier kartesischer Koordinaten verfahrbar, von denen die Achsen x und y in der Zeichenebene der Fig. 7 liegen und die Achse z rechtwinklig dazu verläuft.

Bei einem typischen Ausführungsbeispiel der Erfindung ist der Werkstücktisch 30 in einer Horizontalebene angeordnet und um eine vertikale Achse 31 verdrehbar. Demzufolge liegen auch die Achsen x und y in einer Horizontalebene, und z symbolisiert eine vertikale Spindelachse.

Die Achse, entlang der sich die Wellen 35 und 35a erstrecken, ist in Fig. 7 mit 41 bezeichnet.

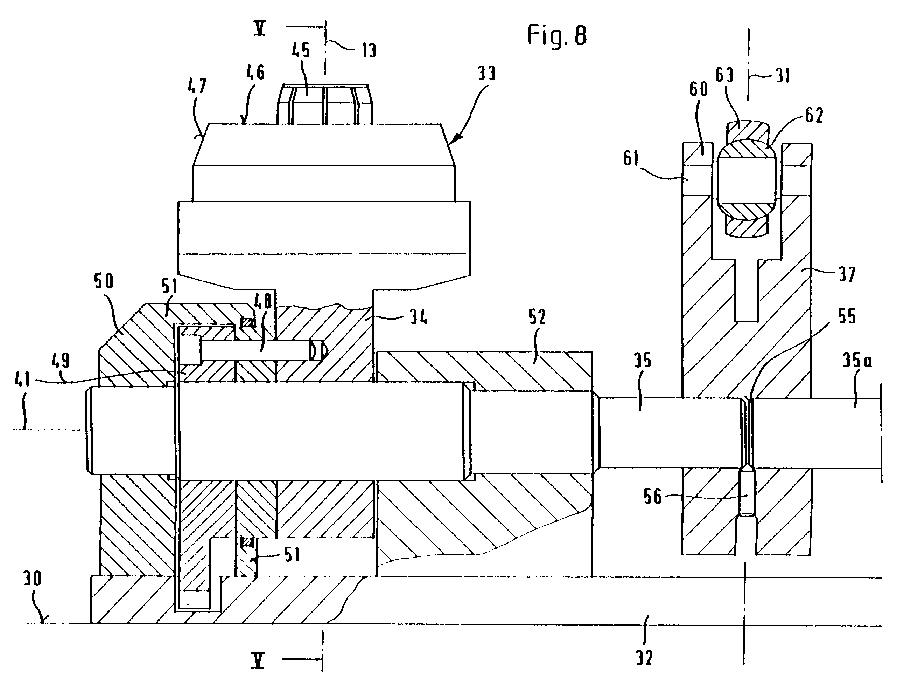

Fig. 8 zeigt einen Teilschnitt entlang der Linie VIII-VIII von Fig. 7 und damit eine Seitenansicht der Aufnahme 33.

In Richtung der ersten Achse 13 des Rades 10 steht axial aus der Aufnahme 33 ein Spreizglied 45 vor, das sich aus einer radialen Referenzfläche 46 erhebt. An die Referenzfläche 46 schließt sich ein nach unten öffnender konischer Abschnitt 47 an. Die Abmessungen der Referenzfläche 46, des konischen Abschnitts 47 sowie der weiteren Komponenten der Aufnahme 33 sind an den Innenraum der Schüssel 12 des jeweils zu bearbeitenden Rades 10 angepaßt.

Die Wippe 34 ist mittels einer axial verlaufenden Schraube 48 drehstarr mit einem Anschlagteil 49 verbunden, das in einer ersten Lagerschale 50 drehbar angeordnet ist. Die Lagerschale 50 stellt gleichzeitig eine Kapselung 51 dar, so daß das Anschlagteil 49 nach außen hin abgekapselt ist und vom Schmiermittel der Welle 35 umgeben wird.

Im mittleren Bereich ist die Welle 35 in einer zweiten Lagerschale 52 drehbar gehalten, wobei sich die Lagerschalen 50 und 52 zu beiden Seiten der Wippe 34 befinden.

In der rechten Hälfte von Fig. 8 ist erkennbar, daß die Wellen 35, 35a sich in Richtung derselben vierten Achse 41 erstrecken und mit ihren Stirnflächen eng aneinandergrenzen. Die Stirnflächen sind mit Fasen 55 versehen, und ein Spreizstift 56 oder eine Spreizschraube ist mit ihrer Spitze derart angeordnet, daß sie bei axialer Verstellung die Wellen 35 und 35a gegeneinander zu distanzieren vermag. Auf diese Weise können die Positionen der Aufnahmen 33 und 33a relativ zur Hochachse 31 präzise einjustiert werden, so daß beim Hin- und Herverschwenken des Werkstücktischs 30 um jeweils 180° die Aufnahmen 33 und 33a jeweils in eine identische Position im Arbeitsbereich der Spindel des Bearbeitungszentrums gelangen.

In der rechten Hälfte von Fig. 8 ist ferner zu erkennen, daß die Kurbel 37 in ein gabelförmiges freies Ende 60 ausläuft, das einen parallel zur vierten Achse 41 verlaufenden Bolzen 61 trägt. Der Bolzen 61 faßt durch ein Auge 62, das am freien Ende einer Kolbenstange 63 angeordnet ist.

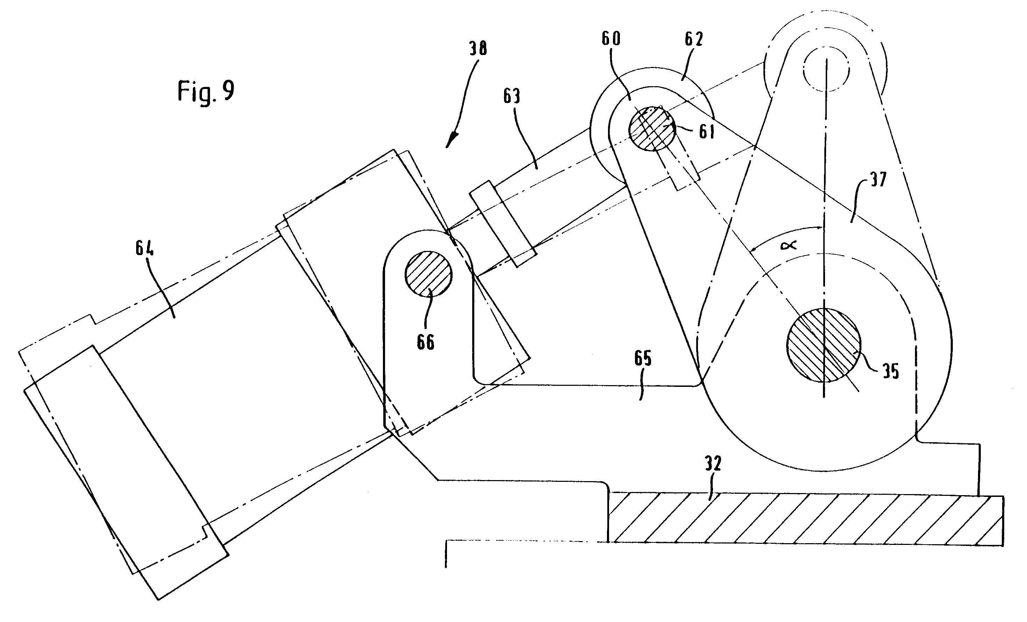

Wie man ergänzend aus Fig. 9 erkennt, ist der Kolben 63 Teil der ersten Kolben-Zylinder-Einheit 38. Der Zylinder 64 der ersten Kolben-Zylinder-Einheit 38 ist seinerseits an einer Halterung 65 mittels eines Bolzens 66 schwenkbar gelagert. Die Achsen der Bolzen 61 und 66 verlaufen parallel zur vierten Achse 41 der Welle 35.

Die Halterung 65 ist ihrerseits raumfest mit der Grundplatte 32 verbunden.

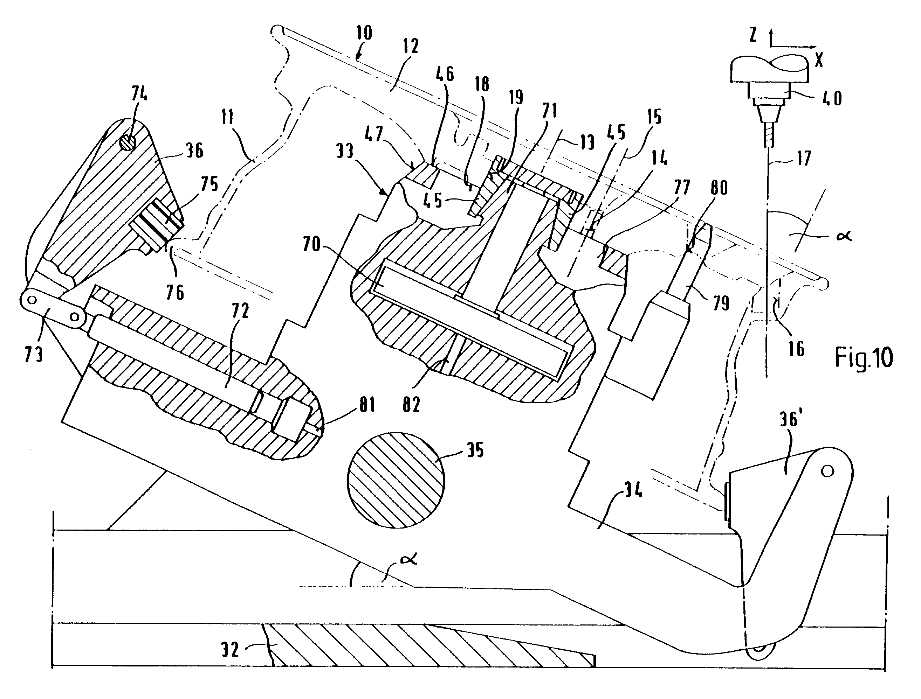

Fig. 10 zeigt weitere Einzelheiten der Aufspannung eines Rades 10 auf der Aufnahme 33.

In die Aufnahme 33 ist eine zweite Kolben-Zylinder-Einheit 70 integriert, deren Betätigungsrichtung in der ersten Achse 13, der Mittelachse des Rades 10 liegt. Das freie Ende der zweiten Kolben-Zylinder-Einheit 70 betätigt einen Spreizkonus 71, der im nicht-aktivierten Zustand gerade formschlüssig oder mit geringfügigem Untermaß durch die Mittenöffnung 19 eines zunächst noch lose auf die Aufnahme 33 aufgesetzten Rades 10 faßt. Bei Betätigung der zweiten Kolben-Zylinder-Einheit 70 spreizt sich der Spreizkonus 71 radial nach außen und kann auf diese Weise das Rad 10 radial zentrieren und axial sowie radial halten.

In die Wippe 34 sind in diametraler Richtung zwei dritte Kolben-Zylinder-Einheiten 72 integriert, von denen eine in Fig. 10 im Teilschnitt zu erkennen ist. Die dritte Kolben-Zylinder-Einheit 72 trägt an ihrem freien Betätigungsende ein Gestänge 73, über das sie am unteren Ende des Niederhalters 36 angreift. Der Niederhalter 36 ist um einen Bolzen 74 schwenkbar gelagert, der sich parallel zur Welle 35 erstreckt.

Der Niederhalter 36 ist bevorzugt mit einem Anlagestück 75, z.B. aus Kunststoff, versehen, mit dem er sich von innen bzw. der Darstellung der Fig. 10 von oben an ein Felgenhorn 76 des Rades 10 anlegt, wenn dieses mit seiner Referenzebene 18 auf die Referenzfläche 46 der Aufnahme 33 aufgelegt wurde.

An einer definierten Umfangsstellung der Aufnahme 33 steht radial von dieser ein Halter für einen axialen Zentrierdorn 79 ab, der bei korrekt auf die Aufnahme 33 aufgesetztem Rad 10 durch eine zugehörige definierte Öffnung 80 in der Schüssel 12 greift.

Die Kolben-Zylinder-Einheiten 70, 72 sind über Fluidleitungen 81, 82 mit einem Fluid, beispielsweise Preßluft oder Hydrauliköl beaufschlagbar. Die Fluidleitungen 81, 82 können zur gemeinsamen Betätigung der Kolben-Zylinder-Einheiten 70 und 72 miteinander verbunden und an ein gemeinsames Versorgungs- und Schaltgerät angeschlossen sein.

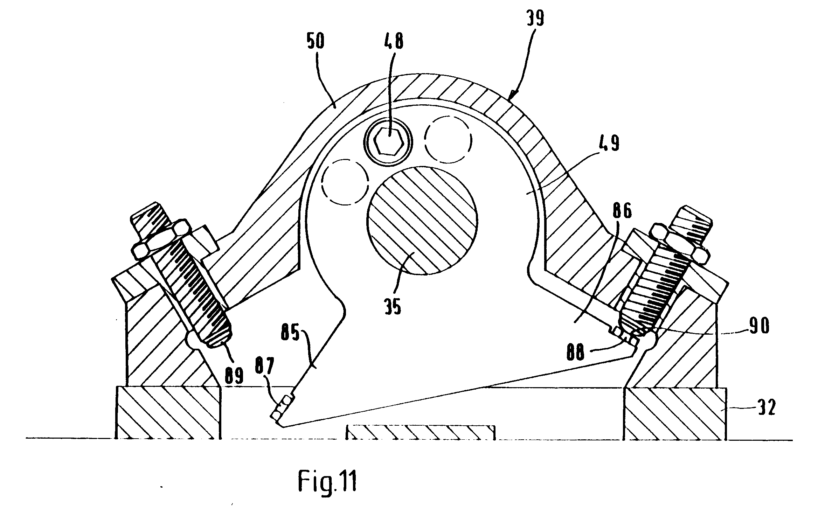

Fig. 11 zeigt schließlich noch Einheiten des Anschlages 39.

Das Anschlagteil 49 läuft nach unten in zwei Schenkel 85, 86 aus, die an ihren freien Enden mit Anschlagschrauben 87, 88 versehen sind. Die erste Lagerschale 50 ist im Bereich ihres Überganges zur Grundplatte 32 ebenfalls mit Anschlagschrauben 89 und 90 versehen, so daß durch Einstellen der Anschlagschrauben 87 bis 90 ein begrenzter Verschwenkbereich für das Anschlagteil 49 eingestellt werden kann. Dieser Verschwenkbereich entspricht bei dem in den Fig. dargestellten Ausführungsbeispiel einem Winkel $\alpha$ von beispielsweise 15°.

Die Wirkungsweise der in den Fig. 7 bis 11 dargestellten Vorrichtung ist wie folgt:
Durch die numerische Steuerung der Werkzeugmaschine wird der Werkstücktisch 30, auf dem sich sämtliche vorstehend erläuterten Komponenten finden, beispielsweise in die in Fig. 7 dargestellte Stellung verschwenkt, in der sich die Aufnahme 33a im Arbeitsraum der Spindel befinden und damit eine Bearbeitungsseite des Werkstücktischs 30 definieren möge, während sich die Aufnahme 33 dann auf der sogenannten Bestückungsseite im Zugriffsbereich eines Benutzers des Bearbeitungszentrums befindet.

In dieser Position bearbeitet das mit 40 angedeutete Werkzeug des Bearbeitungszentrums das Rad 10, das auf die Aufnahme 33a aufgespannt ist. Hierzu werden beispielsweise zunächst die fünf Befestigungsbohrungen 14 angebracht, die üblicherweise als Stufenbohrungen mit beidseitigen Ansenkungen ausgeführt sind. Während des Anbringens der Befestigungsbohrungen 14 befindet sich die Aufnahme 33a mit der Wippe 34a in einer Position, in der die Referenzfläche 46 sich parallel zur Oberfläche des Werkstücktischs 30 und damit senkrecht zur z-Achse des Werkzeugs 40 befindet.

Nachdem alle fünf Befestigungsbohrungen 14 oder ggf. weitere gleichachsig gerichtete Bohrungen angebracht wurden, wird die erste Kolben-Zylinder-Einheit 38 betätigt und die Kolbenstange 63 in den Zylinder 64 eingezogen. Auf diese Weise wird die Kurbel 37 in der Darstellung der Fig. 9 im Gegenuhrzeigersinn auf der strichpunktiert eingezeichneten Stellung in die durchgezogen eingezeichnete Stellung verschwenkt. Die Aufnahme 33 gelangt damit in die in Fig. 10 dargestellte verschwenkte Stellung, in der die dritte Achse 17 der Ventilbohrung 16 sich parallel zur z-Achse des Werkzeugs 40 erstreckt. Durch Verfahren der Spindel kann das Werkzeug 40 in eine Bearbeitungsposition gebracht werden, in der die Werkzeuge mit der Ventilbohrung 16 fluchten und die Ventilbohrung 16 kann in der beschriebenen Weise angebracht werden.

Nach dem Anbringen der zur Mittelachse 13 des Rades 10 geneigten Ventilbohrung 16 wird durch erneutes Betätigen der ersten Kolben-Zylinder-Einheit 38 die Aufnahme 33 wieder in die horizontal ausgerichtete Ausgangsstellung gebracht und der Werkstücktisch 30 um seine Hochachse 31 um 180° gedreht.

Durch Betätigen der zweiten und dritten Kolben-Zylinder-Einheiten 70, 72 werden nun die Niederhalter 36 und 36` vom Felgenhorn 76 abgehoben und der Spreizkonus 71 radial eingefahren, so daß das bearbeitete Rad 10 von der Aufnahme 33 in axialer Richtung abgehoben werden kann.

Der Benutzer der Werkzeugmaschine kann nun auf die freie Aufnahme 33 ein neues, unbearbeitetes Rad 10 aufsetzen. Dies gelingt wegen der Anwesenheit des Zentrierdorns 79 nur in einer Winkelstellung des Rades 10, in der der Zentrierdorn 79 gerade in die entsprechende Öffnung 80 in der Schüssel 12 des Rades 10 faßt.

Das Rad 10 gelangt beim Aufsetzen auf die Aufnahme 33 mit seiner Referenzebene 18 in Anlage auf der Referenzfläche 46. Durch Betätigen des in den Fig. nicht dargestellten Steuer-und Schaltgeräts wird nun erneut ein Druckmedium in die Fluidleitungen 81, 82 eingelassen, so daß sich die Niederhalter 36 und 36` mit ihren Anlagestücken 75 von oben an das Felgenhorn 76 anlegen und gleichzeitig oder geringfügig verzögert der Spreizkonus 71 ausgefahren wird, um sich von innen in der Mittenöffnung 19 des Rades 10 kraft- und formschlüssig einzuklemmen.

**Patentansprüche**

1. Verfahren zum Einbringen von Bohrungen in Räder (10) von Kraftfahrzeugen, bei dem zur Achse (13) des Rades (10) parallel verlaufende Befestigungsbohrungen (14) in eine Schüssel (12) sowie zur Achse (13) des Rades (10) unter einem Winkel ($\alpha$) verlaufende Ventilbohrungen 16) in eine Felge (11) des Rades (10) eingebracht werden, wobei die Bohrungen (14, 16) zwischen einer ersten und einer zweiten Oberfläche (135, 136) eines Bereiches des Rades (10) erzeugt werden, und die Durchmesser ($D_1$ $D_3$) der Bohrungen (14, 16) in der Ebene der Oberflächen (135, 136) größer sind als ein Durchmesser ($D3$) in Abschnitten (141 bis 143) zwischen den Oberflächen (135, 136), und wobei ferner eine Werkzeugmaschine (149) verwendet wird, in deren Spindel Werkzeuge (40; 160) einspannbar sind und die Spindel in der Achse (166) der Werkzeuge (40; 160) sowie senkrecht dazu jeweils relativ zu dem Rad (10) verfahrbar ist, mit den Verfahrensschritten:

a) Einspannen eines Rades (10) in einer Aufnahme (33, 33a) auf einem Werkstücktisch (30; 134), derart, daß die erste Oberfläche (135) der Spindel zu weist, die zweite Oberfläche (136) von der Spindel abgewandt ist und die Achse (13) des Rades (10) eine erste Winkelstellung zur Achse (166) der Werkzeuge (40; 160) einnimmt;

b) Anbringen einer ersten Durchgangsbohrung mit dem jeweils kleinsten Durchmesser ($D_2$) der Bohrung;

c) Ansenken der ersten Durchgangsbohrung in der ersten Oberfläche (135) mit einem ersten Abschnitt (140) größeren Durchmessers ($D_1$);

d) unter Beibehaltung der Einspannung des Rades (10) radiales Verfahren eines Werkzeuges (160), das an seiner Unterseite einen exzentrisch zur Achse (166) des Werkzeuges (160) angeordneten axialen Schaft (162) aufweist, der mit einem radialen Vorsprung (163) versehen ist, der wiederum auf seiner der Spindel zugewandten Seite eine Schneide (165) trägt, wobei die radiale lichte Breite des Schaftes (162) mit Vorsprung (163) und Schneide (164) kleiner ist als der Durchmesser ($D_2$) der Durchgangsbohrung, in eine erste Position, bei der die Achse (166) des Werkzeuges (160) derart gegenüber einer Längsachse (15) der Durchgangsbohrung versetzt ist, daß der Schaft (162) mit Vorsprung (163) und Schneide (165) sich axial innerhalb des Umrisses der Durchgangsbohrung befindet;

e) axiales Einfahren des Werkzeuges (160) durch die Durchgangsbohrung hindurch bis in eine zweite Position, in der sich die Schneide (165) jenseits der von der Spindel abgewandten zweiten Oberfläche (136) befindet;

f) radiales Verfahren des Werkzeuges (160) in eine dritte Position, in der die Achse (166) des Werkzeuges (160) koaxial zur Längsachse (15) der Durchgangsbohrung liegt;

g) Einziehen und Drehen des Werkzeuges (160) zum Anbringen des zweiten Abschnittes (144) größeren Durchmessers ($D_3$);

h) radiales Verfahren des Werkzeuges (160) zurück in die zweite Position;

i) axiales Ausfahren des Werkzeuges (160) zurück in die erste Position;

k) Verschwenken der Aufnahme (33, 33a) um den Winkel ($\alpha$) um eine zur Achse (13) des Rades (10) senkrechte Achse;

l) Anbringen einer zweiten Durchgangsbohrung mit dem jeweils kleinsten Durchmesser ($D_2$) der Bohrung;

m) Ansenken der zweiten Durchgangsbohrung in der ersten Oberfläche (135) mit einem ersten Abschnitt (140) größeren Durchmessers ($D_1$);

n) unter Beibehaltung der Einspannung des Rades (10) radiales Verfahren eines Werkzeuges (160), das an seiner Unterseite einen exzentrisch zur Achse (166) des Werkzeuges (160) angeordneten axialen Schaft (162) aufweist, der mit einem radialen Vorsprung (163) versehen ist, der wiederum auf seiner der Spindel zugewandten Seite eine Schneide (165) trägt, wobei die radiale lichte Breite des Schaftes (162) mit Vorsprung (163) und Schneide (164) kleiner ist als der Durchmesser ($D_2$) der Durchgangsbohrung, in eine vierte Position, bei der die Achse (166) des Werkzeuges (160) derart gegenüber einer Längsachse (15) der Durchgangsbohrung versetzt ist, daß der Schaft (162) mit Vorsprung (163) und Schneide (165) sich axial innerhalb des Umrisses der Durchgangsbohrung befindet;

o) axiales Einfahren des Werkzeuges (160) durch die Durchgangsbohrung hindurch bis in eine fünfte Position, in der sich die Schneide (165) jenseits der von der Spindel abgewandten zweiten Oberfläche (136) befindet;

p) radiales Verfahren des Werkzeuges (160) in eine sechste Position, in der die Achse (166) des Werkzeuges (160) koaxial zur Längsachse (15) der Durchgangsbohrung liegt;

q) Einziehen und Drehen des Werkzeuges (160) zum Anbringen des zweiten Abschnittes (144) größeren Durchmessers ($D_3$);

r) radiales Verfahren des Werkzeuges (160) zurück in die fünfte Position;

s) axiales Ausfahren des Werkzeuges (160) zurück in die vierte Position.

## Claims

1. Method for machining holes in wheels (10) of motor vehicles, in which bolt holes (14) extending parallel to the axis (13) of the wheel (10) are machined into a disk (12) and valve holes (16) extending at an angle ($\alpha$) to the axis (13) of the wheel (10) are machined into a rim (11) of the wheel (10), the holes (14, 16) being produced between a first and a second surface (135, 136) of an area of the wheel (10) and the diameters ($D_1, D_3$) of the holes (14, 16) in the plane of the surfaces (135, 136) being larger than a diameter ($D_3$) in portions (141 to 143) between the surfaces (135, 136), and a machine tool (149) furthermore being used, in the spindle of which tools (40; 160) can be clamped, and the spindle being movable in the axis (166) of the tools (40; 160) and perpendicularly thereto, in each case relative to the wheel (10), comprising the method steps:

a) clamping of a wheel (10) in a support (33, 33a) on a workpiece table (30; 134) in such a way that the first surface (135) faces the spindle, the second surface (136) faces away from the spindle and the axis (13) of the wheel (10) assumes a first angular position in relation to the axis (166) of the tools (40; 160);

b) machining of a first through hole with the smallest diameter ($D_2$) of the hole in each case;

c) counterboring of the first through hole in the first surface (135) with a first portion (140) of relatively large diameter ($D_1$);

d) while maintaining the clamping of the wheel (10), radial movement of a tool (160) which, on its underside, has an axial shank (162) which is arranged eccentrically to the axis (166) of the tool (160) and is provided with a radial projection (163) which, in turn, bears a cutting edge (165) on its side facing the spindle, the radial clear width of the shank (162) with the projection (163) and the cutting edge (165) being smaller than the diameter ($D_2$) of the through hole, into a first position, in which the axis (166) of the tool (160) is offset relative to a longitudinal axis (15) of the through hole to such an extent that the shank (162) with the projection (163) and the cutting edge (165) is situated axially within the outline of the through hole;

e) axial movement of the tool (160) through the throughhole as far as a second position, in which the cutting edge (165) is situated beyond the second surface (136) facing away from the spindle;

f) radial movement of the tool (160) into a third position, in which the axis (166) of the tool (160) is coaxial to the longitudinal axis (15) of the through hole;

g) pulling in and rotation of the tool (160) for the purpose of machining the second portion (144) of relatively large diameter (D₃);

h) radial movement of the tool (160) back into the second position;

i) axial retraction of the tool (160) back into the first position;

k) swivelling of the support (33, 33a) by the angle (α) about an axis perpendicular to the axis (13) of the wheel (10);

l) machining of a second throughhole with the smallest diameter (D₂) of the hole in each case;

m) Counterboring of the second through hole in the first surface (135) with a first portion (140) of relatively large diameter (D₁);

n) while maintaining the clamping of the wheel (10), radial movement of a tool (160) which, on its underside, has an axial shank (162) which is arranged eccentrically to the axis (166) of the tool (160) and is provided with a radial projection (163) which, in turn, bears a cutting edge (165) on its side facing the spindle, the radial clear width of the shank (162) with the projection (163) and the cutting edge (165) being smaller than the diameter (D₂) of the through hole, into a fourth position, in which the axis (166) of the tool (160) is offset relative to a longitudinal axis (15) of the through hole to such an extent that the shank (162) with the projection (163) and the cutting edge (165) is situated axially within the outline of the through hole;

o) axial movement of the tool (160) through the throughhole as far as a fifth position, in which the cutting edge (165) is situated beyond the second surface (136) facing away from the spindle;

p) radial movement of the tool (160) into a sixth position, in which the axis (166) of the tool (160) is coaxial to the longitudinal axis (15) of the through hole;

q) pulling in and rotation of the tool (160) for the purpose of machining the second portion (144) of relatively large diameter (D₃);

r) radial movement of the tool (160) back into the fifth position;

s) axial retraction of the tool (160) back into the fourth position.

**Revendications**

1. Procédé pour usiner des trous dans des roues (10) de véhicules automobiles, dans lequel des trous de fixation (14) qui s'étendent parallèlement à l'axe (13) de la roue (10) sont usinés dans un disque (12), ainsi que des trous de valve (16) sont usinés dans une jante (11) de roue (10), en faisant un angle (α) par rapport à l'axe (13) de la roue (10), les trous (14,16) étant réalisés entre une première et une deuxième surface (135,136) d'une zone de la roue (10), et les diamètres (D1,D3) des trous (14,16) dans le plan des surfaces (135,136) étant supérieurs à un diamètre D2), dans des sections (141 à 143) situées entre les surfaces (135,136), et où en outre est utilisée une machine-outil (149) dans la broche de laquelle des outils (40;160) sont susceptibles d'être fixés et la broche étant chaque fois déplaçable par rapport à la roue (10), dans l'axe (166) des outils (40;160) ainsi que perpendiculairement à celui-ci, avec les étapes de procédé suivantes :

a) fixation d'une roue (10) dans un logement (33,33a) sur une table de machine-outil (30;134), de telle façon que la première surface (135) soit tournée vers la broche, que la deuxième surface (136) soit opposée à la broche, et que l'axe (13) de la roue (10) prenne une première position angulaire par rapport à l'axe (166) des outils (40;160);

b) usinage d'un premier trou de passage avec le plus petit diamètre (D2) de perçage;

c) approfondissement du premier trou de passage dans la première surface (135), avec une première section (140) de plus grand diamètre (D1);

d) tout en conservant le serrage de la roue (10), déplacement radial d'un outil (160) qui présente sur sa face inférieure une tige axiale (162), disposée de façon excentrique par rapport à l'axe (166) de l'outil (160) et pourvue d'une saillie radiale (163), qui porte à son tour un tranchant (165), sur sa face tournée vers la broche, la largeur radiale libre de la tige (162) avec la saillie (163) étant inférieure au diamètre (D2) du trou de passage, en une première position, dans laquelle l'axe (166) de l'outil (160) est décalé par rapport à un axe longitudinal (15) du trou de passage, de telle façon que la tige (162), avec la saillie (163) et le tranchant (165), se trouve axialement à l'intérieur du contour du trou de passage;

e) insertion axiale de l'outil (160) dans le trou de passage, jusqu'à une deuxième position, dans laquelle le tranchant (165) se trouve au delà de la deuxième surface (136), opposée à la broche;

f) déplacement radial de l'outil (160), en une troisième position, dans laquelle l'axe (166) de l'outil (160) se situe coaxialement à l'axe longitudinal (15) du trou de passage;

g) insertion et rotation de l'outil (160) pour usiner la deuxième section (144) de plus grand diamètre (D3);

h) déplacement radial de l'outil (160), pour revenir en deuxième position;

i) sortie axiale de l'outil (160), pour revenir en première position;

k) pivotement du logement (33,33a), de l'angle ($\alpha$), autour d'un axe perpendiculaire à l'axe (13) de roue (10);

l) usinage d'un deuxième trou de passage, du plus petit diamètre (D2) du trou;

m) approfondissement du deuxième trou de passage dans la première surface (135), avec une première section (140) de grand diamètre (D1);

n) tout en conservant le serrage de la roue (10), déplacement radial d'un outil (160) qui présente sur sa face inférieure une tige axiale (162), disposée de façon excentrique par rapport à l'axe (166) de l'outil (160) et pourvue d'une saillie radiale (163), qui porte à son tour un tranchant (165), sur sa face tournée vers la broche, la largeur radiale libre de la tige (162) avec la saillie (163) étant inférieure au diamètre (D2) du trou de passage, en une quatrième position, dans laquelle l'axe (166) de l'outil (160) est décalé par rapport à un axe longitudinal (15) du trou de passage, de telle façon que la tige (162), avec la saillie (163) et le tranchant (165), se trouve axialement à l'intérieur du contour du trou de passage;

o) insertion axiale de l'outil (160) dans le trou de passage, jusqu'à une cinquième position, dans laquelle le tranchant (165) se trouve au delà de la deuxième surface (136), opposée à la broche;

p) déplacement radial de l'outil (160), en une sixième position, dans laquelle l'axe (166) de l'outil (160) se situe coaxialement à l'axe longitudinal (15) du trou de passage;

q) insertion et rotation de l'outil (160) pour usiner la deuxième section (144) de plus grand diamètre (D3);

r) déplacement radial de l'outil (160), pour revenir en cinquième position;

s) sortie axiale de l'outil (160), pour revenir en quatrième position.

*Fig.1*

*Fig.2*

Fig. 3

Fig. 4

Fig. 5

Fig. 6

Fig.7

Fig. 8

EP 0 312 819 B1

Fig. 9

EP 0 312 819 B1

Fig. 10

EP 0 312 819 B1

Fig.11